# EUROPÄISCHE PATENTSCHRIFT

(11) **EP 2 525 941 B1**
(45) Veröffentlichungstag und Bekanntmachung des Hinweises auf die Patenterteilung: **17.10.2018**
(21) Anmeldenummer: 10785364.0
(22) Anmeldetag: 04.12.2010
(51) Int. Cl.: B23P 21/00, B25J 5/02, B25J 9/00

(54) **MONTAGEEINRICHTUNG**
ASSEMBLY DEVICE
DISPOSITIF DE MONTAGE

(30) Priorität: 21.01.2010 DE 102010005314
(43) Veröffentlichungstag der Anmeldung: 28.11.2012
(73) Patentinhaber: Daimler AG, 70327 Stuttgart (DE)
(72) Erfinder: HABISREITINGER, Uwe, 72290 Lossburg (DE)
(74) Vertreter: JENSEN & SON
(86) Internationale Anmeldenummer: PCT/EP2010/007376
(87) Internationale Veröffentlichungsnummer: WO 2011/088865

(56) Entgegenhaltungen:
- EP-A1- 1 642 671
- EP-A1- 1 854 579
- DE-A1-102006 026 132
- GB-A- 2 431 481
- JP-A- 6 206 582
- JP-A- 2000 043 768

## Beschreibung

Die Erfindung betrifft eine Montageeinrichtung mit einer Bearbeitungseinrichtung zum Bearbeiten eines Werkstücks, insbesondere einer Fahrzeugkarosserie. Die Bearbeitungseinrichtung ist durch Ankoppeln an das Werkstück in eine Förderrichtung mitbewegbar, in welche eine Fördereinrichtung das Werkstück fördert. Des Weiteren umfasst die Montageeinrichtung eine Transporteinrichtung zum Transportieren der Bearbeitungseinrichtung.
Die DE 10 2006 026 132 A1 beschreibt ein Montagesystem mit einer Förderbahn, auf welcher Fahrzeugkarosserien in eine Förderrichtung gefördert werden. Neben der Förderbahn ist ein Industrieroboter auf einer Roboterförderbahn ebenfalls in die Förderrichtung bewegbar. Während der Industrieroboter die Fahrzeugkarosserie bearbeitet, ist der Industrieroboter an die Fahrzeugkarosserie angekoppelt. Der Industrieroboter ist hierbei schwimmend gelagert. Durch das Bewegen der Fahrzeugkarosserie wird der Industrieroboter mitbewegt, wobei die schwimmende Lagerung es ermöglicht, dass der Industrieroboter Bewegungen der Fahrzeugkarosserie relativ zu der Förderbahn folgt. Es ist so ein mitfahrendes Montagesystem geschaffen.
Aufgabe der vorliegenden Erfindung ist es, eine verbesserte Montageeinrichtung der eingangs genannten Art bereitzustellen.
Die Aufgabe wird durch eine Montageeinrichtung mit den Merkmalen des Patentanspruchs 1 gelöst. Vorteilhafte Ausgestaltungen mit zweckmäßigen Weiterbildungen der Erfindung sind im abhängigen Patentanspruch angegeben.
Die erfindungsgemäße Montageeinrichtung umfasst eine Bearbeitungseinrichtung zum Bearbeiten eines Werkstücks, insbesondere einer Fahrzeugkarosserie. Bei der Bearbeitungseinrichtung kann es sich insbesondere um einen Roboter handeln, welcher Bauteile oder Module an einer Fahrzeugkarosserie anbringt und/oder Funktionstests durchführt. Die Bearbeitungseinrichtung ist durch Ankoppeln an das Werkstück in eine Förderrichtung mitbewegbar, in welche eine Fördereinrichtung das Werkstück fördert. Des Weiteren umfasst die Montageeinrichtung eine Transporteinrichtung zum Transportieren der Bearbeitungseinrichtung. Hierbei ist die Transporteinrichtung unabhängig von der Fördereinrichtung und schienenungebunden bewegbar, wenn die Bearbeitungseinrichtung von dem Werkstück entkoppelt ist. Die Montageeinrichtung ist hierbei dadurch verbessert, dass eine besonders große räumliche Flexibilität der Bearbeitungseinrichtung gegeben ist.
Handelt es sich bei der Fördereinrichtung um ein Förderband, so kann die Transporteinrichtung mit der Geschwindigkeit des Förderbands neben dem Förderband herbewegt werden, bis die Bearbeitungseinrichtung an das Werkstück angekoppelt wird. Nach dem Ankoppeln sorgt dann die Bewegung des Förderbands für das Mitbewegen der Montageeinrichtung mit dem Förderband.
Sobald die Bearbeitungseinrichtung die vorgesehenen Bearbeitungsschritte vorgenommen hat, kann sie von der Fördereinrichtung entkoppelt werden und über die Transporteinrichtung an einen anderen Einsatzort verbracht werden. So kann für dieselbe oder eine andere Bearbeitung, etwa eine Montageoperation, ein anderer Abschnitt der Fördereinrichtung angefahren werden. Es kann auch nach dem Entkoppeln der Bearbeitungseinrichtung von dem Werkstück die Transporteinrichtung die Bearbeitungseinrichtung hin zu einer Bestückungsstation verbringen, an welcher Material aufgenommen und zu dem Ort transportiert werden kann, an welchem das Material verbaut werden soll.

Da die Bearbeitungseinrichtung schwimmend an der Transporteinrichtung gelagert ist, können Geschwindigkeitsunterschiede zwischen der Fördereinrichtung und der Transporteinrichtung über Relativbewegungen der Bearbeitungseinrichtung relativ zu der Transporteinrichtung kompensiert werden. Bevorzugt ist die Bearbeitungseinrichtung in allen Freiheitsgraden schwimmend an der Transporteinrichtung gelagert.
Gemäß einem weiteren Aspekt der Erfindung ist eine verbesserte Montageeinrichtung der eingangs genannten Art bereitgestellt, wenn die Transporteinrichtung eine Koppeleinrichtung zum Ankoppeln wenigstens eines Bauteilspeichers aufweist, welcher im angekoppelten Zustand mit der Transporteinrichtung mitbewegbar ist. Die Montageeinrichtung braucht dann nach dem Beenden eines Bearbeitungsschritts, etwa nach dem Verbauen eines Bauteils, nicht zu dem Bauteilspeicher zurückzufahren, da ja der Bauteilspeicher mit der Transporteinrichtung mitbewegt wird.
Bevorzugt wird der Bauteilspeicher über die Koppeleinrichtung mit Druckluft beaufschlagt, über welche ein an dem Bauteilspeicher angebrachtes Luftkissen versorgt wird. Dies ist insbesondere dann vorteilhaft, wenn die Montageeinrichtung selber über wenigstens ein mit Druckluft zu versorgendes Luftkissen verfügt.
Bevorzugt werden zwei Bauteilspeicher mit der Montageeinrichtung mitgeführt, so dass nach dem Leeren eines der Bauteilspeicher der zweite Bauteilspeicher weitere zu verbauende Bauteile zur Verfügung stellt. Dadurch kann die Montageeinrichtung ohne eine durch den Bestückungsvorgang des Bauteilspeichers mit Bauteilen verursachte Störung kontinuierlich arbeiten, und es kommt zu keiner Produktionspause durch den Bestückungsvorgang, bei welchem der geleerte Bauteilspeicher mit Bauteilen bestückt wird.
An dem Bauteilspeicher und/oder an der Montageeinrichtung kann ein Sensor vorgesehen sein, mittels welchem erfassbar ist, wann der Bauteilspeicher leer ist. Der leere Behälter kann dann an einer Bestückungsstation zurückgelassen und wieder bestückt werden, so dass er dann wieder für die Montageeinrichtung zur Verfügung steht.

Gemäß der Erfindung, wonach die Bearbeitungseinrichtung über eine Trageinrichtung schwimmend gelagert ist, weist die Montageeinrichtung wenigstens eine Kraftbeaufschlagungseinrichtung auf, mittels welcher bei einem Verkippen der Trageinrichtung die Trageinrichtung mit einer dem Verkippen entgegenwirkenden Kraft beaufschlagbar ist. Dies ist insbesondere dann vorteilhaft, wenn mittels der Bearbeitungseinrichtung besonders schwere Bauteile verbaut werden sollen. Dies ist etwa dann der Fall, wenn die Bearbeitungseinrichtung für eine Traglast von mehr als 200 kg, beispielsweise für eine Traglast von 240 kg, ausgelegt ist. Hebt die Bearbeitungseinrichtung ein derartig schweres Bauteil an, so kann ein zu starkes Verkippen der Trageinrichtung und damit hohe Kräfte auf die Kopplung bzw. die Karosserie durch die Kraftbeaufschlagungseinrichtung verhindert werden.
Als Kraftbeaufschlagungseinrichtung können insbesondere Ausgleichszylinder zum Einsatz kommen, welche auf die Trageinrichtung drücken, wenn diese infolge der von der Bearbeitungseinrichtung gehaltenen schweren Last verkippt wird. Die Ausgleichszylinder werden bevorzugt in Abhängigkeit von der Bewegung der Bearbeitungseinrichtung angesteuert. Hierfür kann vorgesehen sein, dass eine Steuerungseinrichtung zum Steuern der Bearbeitungseinrichtung mit einer Steuerungseinrichtung zum Steuern der Montageeinrichtung kommuniziert. Die Bearbeitungseinrichtung kann in jedem Zustand exakt ausbalanciert werden. Dadurch ist verhindert, dass über die Ankopplung der Bearbeitungseinrichtung an das Werkstück unerwünscht hohe Kräfte auf das Werkstück einwirken. Auch unerwünscht hohe Kräfte auf eine Koppeleinheit, welche die Bearbeitungseinrichtung mit dem Werkstück koppelt, infolge von Schwerpunktsverlagerungen der Bearbeitungseinrichtung können so verhindert werden.

Beispielsweise kann die Bearbeitungseinrichtung für eine Traglast von nicht mehr als 50 kg ausgelegt werden. Dadurch kann die Montageeinrichtung technisch besonders einfach und somit besonders kostengünstig ausgelegt werden. Dies gilt insbesondere dann, wenn die Bearbeitungseinrichtung für eine Traglast von nicht mehr als 20 kg, bevorzugt von nicht mehr als 16 kg, ausgelegt ist. Beispielsweise können dann zum Lagern der Bearbeitungseinrichtung an der Transporteinrichtung einfache Luftfedern (Balgzylinder) verwendet werden, welche die schwimmende Lagerung der Bearbeitungseinrichtung sicherstellen.
Bei einer solchen Bearbeitungseinrichtung kann der Roboter zusätzlich zu den oben genannten Einsatzgebieten in einer weiteren möglichen Anwendung bei Beschichtungsvorgängen zum Einsatz kommen, beispielsweise bei der Hohlraumkonservierung, Nahtabdichtung und/oder dem Anbringen von Stopfen im Rahmen von Beschichtungsvorgängen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind.

Dabei zeigen:
- Fig. 1: schematisch ein Montagesystem mit einem Förderband und einer unabhängig von dem Förderband frei bewegbaren Montageeinrichtung;
- Fig. 2: in einer vergrößerten perspektivischen Detailansicht die Montageeinrichtung gemäß Fig. 1; und
- Fig. 3: eine beispielhafte, nicht erfindungsgemäße, technisch besonders einfache Montageeinrichtung.

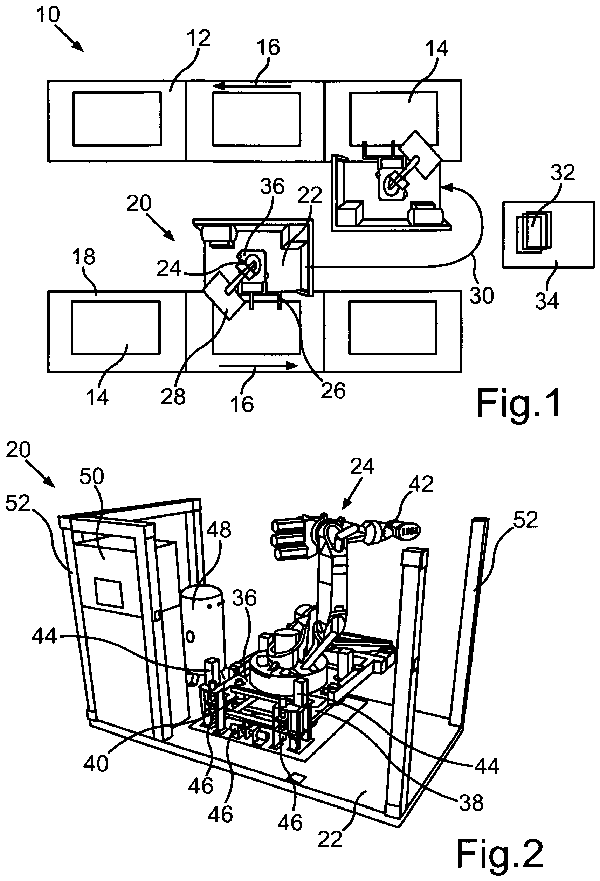

Ein in Fig. 1 schematisch gezeigtes Montagesystem 10 umfasst ein Förderband 12, welches vorliegend beispielhaft Schubplattformen umfasst, und welches Fahrzeugkarosserien 14 in eine Förderrichtung 16 bewegt. Ein zweites Förderband 18 ist analog aufgebaut, jedoch fördert es die Fahrzeugkarosserien 14 in eine entgegensetzte Förderrichtung 16.
Eine Montageeinrichtung 20 umfasst eine Transportplattform 22, auf welcher ein Industrieroboter 24 schwimmend gelagert ist. Der Industrieroboter 24 ist über ein Kopplungsteil 26 mechanisch an die Fahrzeugkarosserie 14 angekoppelt. Bewegt also etwa das Förderband 18 die Fahrzeugkarosserie 14 in die Förderrichtung 16, so wird die Montageeinrichtung 20 in die gleiche Förderrichtung 16 mitbewegt. Hierbei kann sich der Industrieroboter 24 aufgrund der schwimmenden Lagerung in allen Freiheitsgraden relativ zu der Transportplattform 22 bewegen.
Der Industrieroboter 24 ist zum Montieren eines Verglasungsteils 28 an die Fahrzeugkarosserie 14 ausgelegt. Beispielsweise kann mittels des Industrieroboters 24 ein Schiebedach, insbesondere ein außenlaufendes Schiebedach, und/oder eine Frontscheibe an der Fahrzeugkarosserie 14 positioniert und/oder an der Fahrzeugkarosserie 14 festgelegt werden. Der Industrieroboter 24 kann hierbei für eine Traglast von über 200 kg, insbesondere für eine Traglast von bis zu 240 kg, ausgelegt sein. Bei einer derartigen Traglastauslegung des Industrieroboters 24 ist insbesondere die Montage eines Panorama-Glasdaches an die Fahrzeugkarosserie 14 mittels der Montageeinrichtung 20 ermöglicht.
Wenn sich nach dem Montieren des an die Fahrzeugkarosserie 14 zu montierenden Bauteils der Industrieroboter 24 wieder von der Fahrzeugkarosserie 14 abkoppelt, kann mittels der Transportplattform 22 der Industrieroboter 24 zu einem beliebigen gewünschten weiteren Einsatzort verbracht werden. Die Transportplattform 22 ist nämlich unabhängig von dem Förderband 12, 18 und nicht-schienengebunden bewegbar. Dadurch ist eine sehr große Flexibilität beim Einsatz der Montageeinrichtung 20 gegeben. Eine mögliche, nicht-schienengebundene Bewegungsbahn 30 der Montageeinrichtung 20 ist in Fig. 1 beispielhaft dargestellt.

Bei dieser Montageeinrichtung 20 kann die Bewegung der Transportplattform 22 beispielsweise über ein unter der Transportplattform 22 angeordnetes Luftkissen mit einem Reibradantrieb erfolgen. Alternativ kann zum Antrieb beispielsweise ein Elektroantrieb eingesetzt werden, welcher auf die die Geschwindigkeit des Förderbandes 12,18 aufsynchronisiert werden kann. Da der Industrieroboter 24 im angekoppelten Zustand beispielsweise durch zwei in Förderrichtung wirkende Doppelbalgzylinder relativ zur Transportplattform 22 gelagert ist, kann eine einfache Synchronisation des Plattformantriebs mit der Fördereinrichtung innerhalb des Schwimmbereichs des Industrieroboters 24 zur Transportplattform 22 realisiert werden.

Zum autonomen Verbringen der Montageeinrichtung 20 an ihren gewünschten Einsatzort können unterschiedliche fahrerlose Systeme zum Einsatz kommen, etwa eine GPS-Steuerung, eine Steuerung über im Boden verlegte Spulen oder dergleichen Systeme, welche eine Fernsteuerung von außen ermöglichen. Wenn der Industrieroboter 24 an dem ersten Förderband 12 andere Bearbeitungsschritte vornehmen soll als an dem zweiten Förderband 18, können an dem ersten Förderband 12 zu verbauende Bauteile 32 an einem Materialbahnhof 34 im Vorbeifahren aufgenommen werden. Ergänzend oder alternativ kann vorgesehen sein, dass ein (nicht gezeigter) Bauteilspeicher an die Montageeinrichtung 20 angekoppelt und mit dieser zusammen zu ihrem Einsatzort verbracht wird.

Wie insbesondere aus Fig. 2 hervorgeht, ist der Industrieroboter 24 mit einer Tragplatte 36 starr und fest verbunden. Die Tragplatte 36 ist gegenüber einer Grundplatte 38 in der Höhe verstellbar. Hierfür sind zwischen der Tragplatte 36 und der Grundplatte 38 Verstellzylinder 40 vorgesehen. Ist nun an einem Roboterarm 42 des Industrieroboters 24 ein besonders schweres Verglasungsteil 28 - etwa das Panorama-Glasdach für die Fahrzeugkarosserie 14 - gehalten, so sorgen Ausgleichszylinder 44 dafür, dass die Tragplatte 36 allenfalls geringfügig verkippt wird. Hierfür beaufschlagen die Ausgleichszylinder 44 die Grundplatte 38 mit einer Kraft, welche die Gewichtskraft des schweren Verglasungsteils 28 ausgleicht. Die Grundplatte 38 steht des Weiteren mit Stoßdämpferpaaren 46 in Verbindung, welche ruckartige Bewegungen des Industrieroboters 24 durch ihre Dämpfungswirkung verhindern.

Die Montageeinrichtung 20 ist mit weiteren Modulen bestückt, welche ihre Autonomie sicherstellen, etwa einem Druckspeicher 48 für Druckluft und einer Robotersteuerung 50. An Trägern 52 der Montageeinrichtung 20 können zum Schutz vom Werkern Gitter angebracht werden, um auf diese Weise für eine mobile Einzäunung der Montageeinrichtung 20 zu sorgen. Alternativ kann die Transportplattform 22 von einem Rollen aufweisenden und lediglich zum Förderband 12, 18 hin offenen Schutzkäfig umgeben werden, welcher beim Verfahren der Montageeinrichtung 20 mit dieser mitbewegt wird. Auf diese Weise braucht nicht der gesamte Bereich, in welchem sich die Montageeinrichtung 20 bewegt, eingezäunt zu werden, um zu verhindern, dass Werker in einen Bewegungsbereich des Industrieroboters 24 gelangen.

Mittels der für Schwerlasten ausgelegten Montageeinrichtung 20 lassen sich insbesondere Module verbauen, welche bei alternativen Fahrzeugantrieben zum Einsatz kommen. Hierbei kann es sich um Energiespeicher handeln, etwa eine Traktionsbatterie für ein Elektrofahrzeug und/oder ein Hybridfahrzeug. Eine so genannte Plug-in-Batterie kann ein Gewicht von 150 kg aufweisen.

Des Weiteren kann die Montageeinrichtung 20 zum Montieren eines Energieerzeugers, etwa eines Brennstoffzellenstapels, an die Fahrzeugkarosserie 14 ausgelegt sein. Ein solcher Brennstoffzellenstapel kann ein Gewicht von 80 kg aufweisen.

Die Montageeinrichtung 20 ist des Weiteren bevorzugt zum Transportieren und Inbetriebnehmen von Prüfsystemen ausgelegt, wie sie bei der Produktion von Fahrzeugen mit alternativen Antrieben zum Einsatz kommen. Beispielsweise kann ein komplettes Prüfsystem zum Durchführen einer Dichtigkeitsprüfung von Wasserstoffleitungen und zum Prüfen eines Tankdrucks bei einem Brennstoffzellenfahrzeug mittels der Montageeinrichtung 20 an seinen Einsatzort verbracht werden. Der Industrieroboter 24 kann hierbei überprüfen, ob aus dem Leitungssystem Wasserstoffgas austritt. Auch ein Prüfsystem, mittels welchem das Leitungssystem eines Brennstoffzellensystems und/oder zugehörige Kühlmittelleitungen gespült werden können, ist mittels der Montageeinrichtung 20 transportierbar.

Weitere Einsatzgebiete der Montageeinrichtung 20 umfassen im Bereich des Innenausbaus der Fahrzeugkarosserie 14 das Montieren eines Moduldachs, das Einbringen von Dämmmatten, das Verbauen einer Ersatzradmulde, eines Cockpits, eines Frontmoduls, von Scheiben, Sitzen und dergleichen Bauteilen. Darüber hinaus kann die Montageeinrichtung 20 bei Beschichtungsvorgängen zum Einsatz kommen, etwa bei der Hohlraumkonservierung, Nahtabdichtung und/oder dem Einbringen von Autopads oder Stopfen.

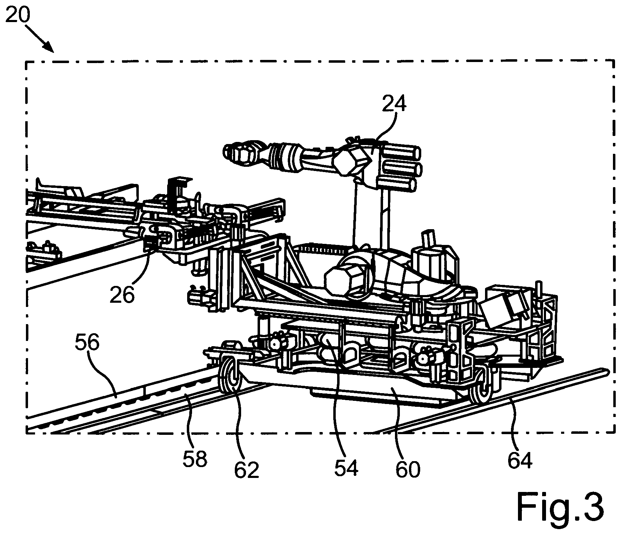

Fig. 3 zeigt eine beispielhafte, nicht erfindungsgemäße , besonders kostengünstige Ausführungsform einer Montageeinrichtung 20, welche für geringe Traglasten ausgelegt ist. Da der Industrieroboter 24, welcher bei dieser Ausführungsform lediglich zum Handhaben von Traglasten von bis zu 16 kg ausgelegt ist, ein vergleichsweise geringes Gewicht aufweist, kann die schwimmende Lagerung des Industrieroboters 24 entsprechend einfach ausgelegt werden. Vorliegend ist der Industrieroboter 24 auf kostengünstigen und einfachen Doppelbalgzylindern 54 gelagert. Dadurch kann Bewegungen der Fahrzeugkarosserie 14 in allen Freiheitsgraden gefolgt werden, wenn die Montageeinrichtung 20 über das Kopplungsteil 26 mit der Fahrzeugkarosserie 14 starr verbunden ist.

Bei der in Fig. 3 gezeigten kostengünstigen, technisch einfachen und kompakten Montageeinrichtung 20 ist diese an einer Fahrschiene 56 geführt, welche eine Zahnstange 58 aufweisen kann. Alternativ kann ein Reibradantrieb vorgesehen sein. Ein Fahrwerk 60 der Montageeinrichtung 20 weist reibungsarme Räder 62 auf, welche auf Schienen 64 geführt sind. Die Räder 62 können aus einem Thermoplast, etwa aus Polyoxymethylen (POM) gefertigt sein. In das Fahrwerk 60 ist des Weiteren ein Druckspeicher zum Beaufschlagen der Doppelbalgzylinder 54 mit Druckluft integriert.
Die in Fig. 3 gezeigte Montageeinrichtung 20 kann aufgrund der kompakten Abmessungen vorteilhaft bei der Türenvormontage, also beim Bestücken einer Fahrzeugtür mit Scheiben, Fensterhebern, Verkleidungsteilen und dergleichen Türmodulen zum Einsatz kommen.
Aufgrund des geringen Eigengewichts der in Fig. 3 gezeigten Montageeinrichtung 20 kann beim Verschrauben von Türmodulen die Montageeinrichtung 20 an ein Türgehänge angekoppelt werden, welches die zu bestückende Fahrzeugtür trägt. Bei einem Ausfall des Industrieroboters 24 kann die Montageeinrichtung 20 von einem Werker einfach von Hand beiseite geschoben werden, und die Montage des Türmoduls kann an der gleichen Station vom Werker vorgenommen werden.

Die kompakte Montageeinrichtung 20 gemäß Fig. 3 kann des Weiteren insbesondere bei der Hohlraumkonservierung zum Einsatz kommen. Auch die in Fig. 3 gezeigte Montageeinrichtung 20 kann mit einem Schutzkäfig versehen werden, welcher für eine hohe Sicherheit bei ihrem Einsatz sorgt.

Die beschriebenen Montageeinrichtungen 20 ermöglichen eine optimale Hallen- und Stationsausnützung durch Vermeidung von Pufferstrecken. Darüber hinaus ist ein flexibles Arbeiten von Werker und Industrieroboter 24 am selben Fahrzeug ermöglicht. Automatisierte Prozesse sind entlang der Fertigungslinie einfach verlagerbar. In der Fließfertigung sind keine getakteten Bandabschnitte vonnöten.

Das durch die Montageeinrichtung 20 bereitgestellte Baukastensystem ermöglicht eine flexible Anpassung der Technologie an individuelle Aufgaben. Darüber hinaus ist eine universelle Einsetzbarkeit hinsichtlich der Prozessanforderungen und dem Einsatzort, bei welchem es sich auch um eine Bühne handeln kann, gegeben. Die mögliche Vorab-Inbetriebnahme sichert eine kurze Integrationszeit an der Fertigungslinie. Insbesondere kann die Montageeinrichtung 20 im Bereich modularer Fahrzeugstrukturen eingesetzt werden.

## Patentansprüche

1. Montageeinrichtung mit einer Bearbeitungseinrichtung (24) zum Bearbeiten eines Werkstücks, insbesondere einer Fahrzeugkarosserie (14), welche durch Ankoppeln an das Werkstück durch die Bewegung einer Fördereinrichtung (12, 18) in eine Förderrichtung (16) mitbewegbar ist, in welche die Fördereinrichtung (12, 18) das Werkstück fördert, und mit einer Transporteinrichtung (22) zum Transportieren der Bearbeitungseinrichtung (24),
**dadurch gekennzeichnet, dass**
die Transporteinrichtung (22) mittels eines Antriebs unabhängig von der Fördereinrichtung (12, 18) und schienenungebunden bewegbar ist, wenn die Bearbeitungseinrichtung (24) von dem Werkstück (14) entkoppelt ist, wobei die Bearbeitungseinrichtung (24) über eine Trageinrichtung (38) schwimmend gelagert ist, wobei die Montageeinrichtung (20) wenigstens eine Kraftbeaufschlagungseinrichtung (44) aufweist, mittels welcher bei einem Verkippen der Trageinrichtung (38) die Trageinrichtung (38) mit einer dem Verkippen entgegenwirkenden Kraft beaufschlagbar ist.

2. Montageeinrichtung nach Anspruch 1,,
**dadurch gekennzeichnet, dass**
die Transporteinrichtung (22) eine Koppeleinrichtung zum Ankoppeln wenigstens eines Bauteilspeichers aufweist, welcher im angekoppelten Zustand mit der Transporteinrichtung (22) mitbewegbar ist.

## Claims

1. Assembly device with a machining device (24) for machining a workpiece, in particular a vehicle body (14), which machining device (24) can be moved together with a conveying device (12, 18) in a conveying direction (16) in which the conveying device (12, 18) conveys the workpiece by coupling to the workpiece, and with a transfer device (22) for transferring the machining device (24),
**characterised in that**
the transfer device (22) can be moved by means of a drive independently of the conveying device (12, 18) and without being rail-mounted if the machining device (24) is uncoupled from the workpiece (14), wherein the machining device (24) is mounted in a floating manner by way of a supporting device (38), the assembly device (20) having at least one force application device (44), by means of which a force acting against tilting can be applied to the supporting device (38) if the supporting device (38) is tilted.

2. Assembly device according to claim 1,
**characterised in that**
the transfer device (22) has a coupling device for coupling at least one component store which can be moved with the transfer device (22) in the coupled state.

## Revendications

1. Dispositif de montage comprenant un dispositif d'usinage (24) destiné à usiner une pièce, en particulier une carrosserie de véhicule (14) qui, en s'accrochant à la pièce, peut se déplacer par le déplacement d'un dispositif d'acheminement (12, 18) dans une direction d'acheminement (16), dans laquelle le dispositif d'acheminement (12, 18) achemine la pièce, et comprenant un dispositif de transport (22) destiné à transporter le dispositif d'usinage (24), **caractérisé en ce que**
le dispositif de transport (22) n'étant pas monté sur des rails, peut se déplacer au moyen d'un entraînement indépendamment du dispositif d'acheminement (12, 18),
lorsque le dispositif d'usinage (24) est découplé de la pièce (14), le dispositif d'usinage (24) étant monté flottant au-dessus d'un dispositif de support (38), le dispositif de montage (20) présentant au moins un dispositif d'application de force (44) au moyen duquel lors d'un basculement du dispositif de support (38) le dispositif de support (38) est soumis à l'effet de la force agissant à l'encontre du basculement.

2. Dispositif de montage selon la revendication 1, **caractérisé en ce que** le dispositif de transport (22) présente un dispositif d'accouplement destiné à accoupler au moins un stock de pièces, qui dans un état accouplé se déplace conjointement avec le dispositif de transport (22).
